# EUROPÄISCHE PATENTSCHRIFT

(11) **EP 3 593 756 B1**
(45) Veröffentlichungstag und Bekanntmachung des Hinweises auf die Patenterteilung: **15.02.2023**
(21) Anmeldenummer: 19190209.7
(22) Anmeldetag: 08.08.2017
(51) Int. Cl.: A61C 13/00, A61C 13/01, A61C 13/08, A61C 13/10

(54) **VERFAHREN ZUR ERZEUGUNG EINER PROTHESE ODER TEILPROTHESE**
METHOD FOR PRODUCING A PROSTHESIS OR PARTIAL PROSTHESIS
PROCÉDÉ DE PRODUCTION D'UNE PROTHÈSE OU D'UNE PROTHÈSE PARTIELLE

(30) Priorität: 10.08.2016 DE 102016114825
(43) Veröffentlichungstag der Anmeldung: 15.01.2020
(62) Teilanmeldung aus: 17749451.5
(73) Patentinhaber: Ivoclar Vivadent AG, 9494 Schaan (LI)
(72) Erfinder: Faust, Alexander, 9442 Berneck (CH); Muhmenthaler, Philipp, 4102 Binningen (CH)
(74) Vertreter: Baldus, Oliver

(56) Entgegenhaltungen:
- WO-A1-2013/124452
- WO-A1-2015/055790
- WO-A1-2015/194449
- WO-A1-2016/041937
- US-A1- 2014 080 094

## Beschreibung

Die Erfindung betrifft ein Verfahren zur Erzeugung einer Prothese oder Teilprothese, gemäß dem Oberbegriff der Ansprüche 1.

Für die Erzeugung einer Prothese oder Teilprothese ist es bekannt, die Prothese mit der Prothesenbasis aus einem Kunststoffteil zu fräsen. Dies geschieht in an sich bekannter Weise, beispielsweise basierend auf dem "Digital Denture"-Verfahren, wie es dem Grunde nach aus der EP1 832 245 B1 bekanntgeworden ist.

Nachteilig ist, dass der Gingivasaum nicht zu 100 % reproduzierbar ist und dass zwei Ebenen aufeinander liegen. Es muss hier einer mathematisch starren Linie gefolgt werden.

Die Prothesenbasis wird hierbei typischerweise aus einem Kunststoffmaterial gefräst, wobei dann auch gleich die Zahnausnehmungen mitgefräst werden. Die Zähne können ihrerseits ebenfalls gefräst werden und hierbei aus einem beliebigen geeigneten Material bestehen, wie zum Beispiel aus Komposit oder aus Keramik. Alternativ können auch fertig konfektionierte Zähne eingesetzt werden; in diesem Fall werden die Zahnausnehmungen an die Basalform der Zähne angepasst.

Mit der WO 2015/194449 A1 wird eine Verbesserung der Integration der Zähne erreicht, indem sie mit einem konvexen Abschnitt der Prothesenbasis verbunden werden. Die Prothesenbasis wird nach dem Einkleben der Prothesenzähne poliert.

Aus der EP 2 742 907 A1 ist eine Verbesserung der Integration der Zähne in die Prothesenbasis ersichtlich, die einen erheblichen Fortschritt gegenüber den zuvor bekannten Lösungen darstellt.

Die Zähne können entweder als Einzelzähne realisiert sein, oder aber als Zahnbogen, bei welchem die benachbarten Zähne über eine Einschnürung einstückig miteinander verbunden sind.

Wenn Einzelzähne verwendet werden, ist es günstig, auf die aus der WO 2015/055790 A1 bekannte Transferschablone zurückzugreifen. Die WO2015/055790 A1 offenbart zudem eine Prothesenbasis, die nach dem Einkleben eines Prothesenzahns zusammen mit dem Prothesenzahn basal bearbeitet wird.

Die Verbindung zwischen den Zähnen und der Prothesenbasis muss jedenfalls fest und insbesondere dauerhaltbar sein. Es kann eine beliebige geeignete Fügemasse oder Verbundmasse verwendet werden, auch beispielsweise ein Klebstoff. Der vorgegebene Spalt zwischen den Zähnen und der Prothesenbasis für die Verbundmasse lässt sich in weiten Bereichen an die Verbundmasse und die sonstigen Erfordernisse anpassen, indem er per CAD entsprechend ausgelegt wird. Typischerweise beträgt die Stärke zwischen 80 µm und 200 µm, in der Regel etwa 100 µm .

Es muss sichergestellt sein, dass die vor dem Einbringen der Zähne in die Zahnausnehmungen eingebrachte Verbundmasse ausreicht, den Klebespalt vollständig auszufüllen.

Dies ist kritisch, denn ein unvollständig ausgefüllter Klebespalt könnte dazu führen, dass die Verbindung zwischen Zahn und Zahnausnehmung verloren geht, abgesehen davon, dass eine dann verbleibende Ausnehmung praktisch nicht keimfrei zu halten ist.

Daher wird üblicherweise mit Verbundmassenüberschuss gearbeitet, der dann aus der Klebefuge hinaus quillt und im Nachhinein entfernt werden muss.

Der unregelmäßig herausgequollene Klebstoffrest oder Verbundmassenrest wird dann typischerweise manuell eliminiert. Das manuelle Bearbeiten mittels eines Handfräsers ist jedoch nicht nur aufwendig, sondern erzeugt auch häufig Ungenauigkeiten zwischen Design und reeller Prothese, verbunden mit Einbußen an der Oberfläche, gerade im Bereich des Gingivasaumes. Aufgrund der dreidimensionalen Ausgestaltung der Saumlinie wird diese punktuell oder in Teilen verschoben, wenn beispielsweise der Zahntechniker an einer Stelle zu viel Material abträgt, was bei der manuellen Nachbearbeitung ohne weiteres geschehen kann.

Wenn andererseits der Zahntechniker - beim Versuch, den Zahnfleischsaum nicht zu verletzen -, zu vorsichtig agiert, bleibt ein Fügematerialüberschuss bestehen, was ebenfalls ästhetisch unbefriedigend ist.

Ferner ist es bereits vorgeschlagen worden, unspezifisch einen Materialüberschuss bei einem Rapid-Prototyping-Verfahren bereitzustellen, und diesen im Nachhinein zu entfernen. Hiermit gehen jedoch die gleichen Probleme wie vorstehend genannt einher, so dass sich dieses Verfahren nicht durchgesetzt hat.

Demgegenüber liegt der Erfindung die Aufgabe zugrunde, ein Verfahren zur Erzeugung einer Prothese oder Teilprothese gemäß den Oberbegriffen der Ansprüche 1 zu schaffen, die hinsichtlich der Herstellung der Prothese weiter verbessert sind, wobei es insbesondere hinsichtlich der Effizienz bei der Herstellung, aber auch hinsichtlich des ästhetischen Ergebnises deutliche Fortschritte mit sich bringen soll.

Diese Aufgabe wird erfindungsgemäß durch Anspruch 1 gelöst. Vorteilhafte Weiterbildungen ergeben sich aus den Unteransprüchen.

Erfindungsgemäß ist es vorgesehen, im Bereich der Verbindung zwischen Zähnen und Prothesenbasis ein Aufmaß gegenüber dem Originalmaß virtuell zu erzeugen. Per CAD wird kurzerhand das Aufmaß von beispielsweise 0,2 mm der Außenform der Zähne und/oder der Prothesenbasis zugeschlagen, und zwar z. B. im Bereich mindestens oberhalb und unterhalb des Zahnfleischsaums, beispielsweise über eine Höhe von 10mm. Das Aufmaß wird nicht an den Stellen bereitgestellt, an denen die Zähne und die Prothesenbasis miteinander verfugt oder verbunden sind oder einander berühren, sondern nur außerhalb dieser Bereiche. Der Fügespalt bleibt so in der aus dem Stand der Technik bekannten Weise erhalten, wobei die Zahnausnehmung reichlich mit Verbundmasse gefüllt wird, so dass sichergestellt ist, dass der Fügespalt nach dem Einbringen der Zähne reichlich mit Fügemasse oder Verbundmasse gefüllt ist, so dass insofern keine Luftspalte mehr bestehen.

Beim Entfernen des Aufmaßes ergibt sich der besondere Vorteil, dass gleichsam automatisch die Fügemasse bzw. Verbundmasse, soweit sie als Überschuss vorliegt, mit entfernt wird.

Ein bislang erforderlicher aufwendigerer und manueller Schritt, der zudem fehlerbehaftet war, kann damit entfallen.

Das Einsetzen der Zähne in die Zahnausnehmungen kann im Falle eines einstückigen Zahnbogens, bei dem die mesialen und distalen Seiten der Zähne über Einschnürungen miteinander verbunden sind, von Hand erfolgen, oder aber auch über eine Transferschablone gemäß der WO 2015/055790 A1.

Das Verbundmaterial wird dann ausgehärtet, wozu beispielsweise eine an sich bekannte Einspannvorrichtung verwendet werden kann, oder auch eine beliebige andere Einrichtung, über welche der gewünschte Anpressdruck zwischen den Zähnen und der Prothesenbasis aufrecht gehalten werden kann, um eine sichere Aushärtung der Verbundmasse zu gewährleisten.

Anschließend an die Aushärtung ist es gemäß der bevorzugten Ausgestaltung des erfindungsgemäßen Verfahrens vorgesehen, die nunmehr mit Zähnen bestückte Prothesenbasis wieder in die Fräsvorrichtung einzuspannen. Der nunmehr erhärtete Überschuss aus Verbundmasse, der auch als Klebstoffüberschuss bezeichnet werden kann, wird weggefräst, zusammen mit dem Aufmaß der Zähne und/oder der Prothesenbasis, so dass sowohl der Zahnfleischsaum als auch die Zähne als auch die Prothesenbasis im Originalmaß vorliegen.

In einer modifizierten Ausgestaltung, die die Wiedereinspann-Ungenauigkeit auf null reduziert, ist es vorgesehen, die Bestückung mit dem Zahnbogen, dem Klebstoffauftrag und die Bestückung mit dem Zahnbogen in der Fräsmaschine im in dem Werkstückhalter eingespannten Zustand der Prothesenbasis vorzusehen.

Dies kann ohne weiteres durch die offene Tür der ausgeschalteten Fräsmaschine erfolgen, wobei es sich versteht, dass es günstig ist, auch hier eine entsprechende Spannvorrichtung einzusetzen, die den Zahnbogen mit dem basalen Bereich der Zähne in die Zahnausnehmungen drückt.

Nach Aushärtung des Klebstoffs wird das Aufmaß von beispielsweise 0,3 mm abgetragen, so dass Zähne, Prothesenbasis und Zahnfleischsaum oder Gingivasaum je im Originalmaß vorliegen.

Erfindungsgemäß ist es besonders günstig, dass durch die maschinelle Entfernung des Klebstoffüberschusses der kettenlinienförmige Gingivasaum exakt wie mit Hilfe des CAD Programms designed vorliegen kann, so dass das ästhetische Ergebnis der Prothese erheblich verbessert ist.

Erfindungsgemäß ist es auch günstig, dass gegenüber der manuellen Entfernung von Klebstoffüberschuss erhebliche Zeiteinsparungen möglich sind. So lässt sich das Aufmaß und der Klebstoffüberschuss per Fräsen in kurzer Zeit, beispielsweise in drei Minuten entfernen, während bei manueller Entfernung durchaus 30 oder 40 Minuten zu veranschlagen waren.

Das Aufmaß muss nicht unbedingt sowohl an der Prothesenbasis als auch an den Zähnen vorgesehen sein.

Es ist beispielsweise auch möglich, konfektionierte Zähne in Standardgröße, also ohne Aufmaß; zu verwenden, und die Prothesenbasis mit einem Aufmaß von beispielsweise 0,15 mm zu fertigen. Dennoch kann das Versäubern und Entfernen der Klebstoffreste in günstiger Weise rasch und maschinell erfolgen.

Der Bereich anschließend an den Gingivasaum ist hierbei bevorzugt frei von Aufmaß, also im Originalmaß. In diesem Übergangsbereich, der beispielsweise 1 mm oder 2 mm hoch sein kann, sammelt sich ein großer Teil des Klebstoffüberschusses an, so dass er sich leichter entfernen lässt.

Erfindungsgemäß besonders günstig ist es auch, dass durch die Realisierung eines Zahnaufmaßes und das anschließende Fräsen auf Originalmaß die Klebeungenauigkeit bei fehlender Transferschablone kompensiert werden kann. Die Zähne oder der Zahnbogen können insofern auch ohne Transferschablone in die Zahnausnehmungen eingedrückt werden, und nach dem Aushärten erfolgt trotzdem eine präzise Realisierung des Originalmaßes der Zähne, aufgrund des zweiten Frässchritts.

Die Erfindung ist nicht auf die Verwendung von Einzelzähnen beschränkt. Anstelle von Einzelzähnen können auch Zahnsegmente oder Zahnbögen verwendet werden, wobei die Zahnsegmente einteilig oder mehrteilig sein können.' Beispielsweise kann eine Vollprothese, die für 14 Zähne bestimmt ist, in drei Teile mit zwei Trios und einem 8er-Zahnbogen realsiert werden (3+3+8). Die Erfindung ist insofern nicht auf die Art der Teilung der Zähne, der Zahnsegmente oder der Zahnbögen beschränkt.

Wenn lediglich die Zähne im Aufmaß vorgesehen sind, muss lediglich dort - und natürlich im Bereich des Zahnfleischsaumes - ein Fräsen erfolgen. Dies ist besonders zeitsparend, insbesondere, wenn gut fräsbare Komposit-Zähne verwendet werden.

In einer modifizierten Ausgestaltung ist es vorgesehen, dass nur ein definierter Bereich mit einer Höhe von beispielsweise 10 mm anschließend an den Zahnfleischsaum, also oberhalb und unterhalb des Zahnfleischsaums, mit Aufmaß gefertigt wird und beim zweiten Fräsen auf Originalmaß abgefräst wird. Bei dieser Lösung wird dann lediglich dieser Bereich mit der Fräsmaschine nochmals abgefahren und auf Originalmaß gefräst.

Bei dieser Lösung lässt sich auch ein ganz geringes virtuelles Aufmaß von lediglich 0,05 oder 0,1 mm realisieren. Der Zahn mit Aufmaß unterscheidet sich dann nur um eine ganz geringe Dicke von dem Zahn mit Originalmaß.

In einer weiteren modifizierten Ausgestaltung ist es vorgesehen, übliche Zähne und eine übliche Prothesenbasis, die in übliche Weise eingeklebt sind, nochmals auf das Originalmaß zu fräsen. Das Fräsen kann hier beschränkt sein beispielsweise auf ein Band mit 6 mm auf der Prothesenbasis und 4 mm auf der Zahnfläche. Dies ist ausgesprochen zeitsparend. Jedoch ist eine eigene Frässtrategie erforderlich, mit der ein Verletzen des Zahns vermieden werden soll.

Erfindungsgemäß ist es besonders günstig, dass der Fügematerialüberschuss automatisch in einem Schritt mitentfernt wird. Hierdurch ergibt sich eine bessere Qualität und verbesserte Erscheinung des Bereichs des Gingivasaums, und zudem ergibt sich eine erhebliche Zeitersparnis.

Es versteht sich, dass das Aufmaß, also die zusätzlich aufgebrachte Schichtdicke, um welche sich der Zahn und/oder die Prothesenbasis von dem Originalmaß unterscheidet, in weiten Bereichen an die Erfordernisse anpassbar ist. Beispielsweise ist eine Stärke im Submilimeterbereich möglich, insbesondere zwischen 0,05 und 0,8mm, bevorzugt etwa 0,3 mm. Das Aufmaß kann eine konstante Schichtstärke sein, aber es ist auch möglich, das Aufmaß mit einer ungleichen Schichtstärke zu realisieren.

Wenn dies der Fall ist, kann das Aufmaß beispielsweise im Okklusal- bzw. Inzisalbereich größer gewählt sein. Grund ist die geometrische Auswirkung einer etwaigen "Verkantung" des Zahns in der Zahnausnehmung, wenn der Zahn ohne Transferschablone in die Zahnausnehmung eingebettet wird.

Eine Schrägstellung in der Zahnausnehmung wirkt sich dann so aus, dass die Schrägstellung im Berührungsbereich zwischen Prothese und Zahn, also im Basalbereich, am geringsten ist und im von dem Basalbereich entfernten Bereich des Zahns am größten. Dies ist aber der Inzisal- bzw. Okklusalbereich.

Dies kann mit einer entsprechenden virtuellen Korrektur berücksichtigt werden, so dass das Aufmaß im Bereich des Zahnfleischsaums am geringsten ist. Bevorzugt ist der unmittelbar dem Zahnfleischsaum benachbarte Bereich ohnehin frei von Aufmaß. Dort liegt damit sowohl der Zahn als auch die Prothese im Originalmaß vor, beispielsweise in einem Band von 1 mm Höhe, das den Zahnfleischsaum umgibt.

Das Aufmaß an der Prothesenbasis ist nicht unmittelbar korreliert mit dem Aufmaß an den Zähnen. Wenn es bei der transferschablonenfreien Aufstellung lediglich darum geht, Zahnstellungsfehler zu kompensieren, kann die Prothesenbasis im Originalmaß, also frei von Aufmaß gefertigt werden, und die Zähne können mit Aufmaß gefertigt werden. Wenn es darum geht, lediglich den Klebeüberschuss zu beseitigen, kann auch in einer modifizierten Ausgestaltung das Aufmaß an den Zähnen reduziert werden, bis auf 0 oder nahe 0.

Die Fräsvorrichtung wird dann so eingestellt, dass beim zweiten Fräsen erneut das Originalmaß abgefahren wird, wobei es sich versteht, dass dann dafür Sorge getragen werden muss, dass ein an sich bereits in Originalmaß vorliegender Zahn nicht verletzt wird. Bei Verwendung von Konfektionszähnen liegen diese typischerweise im Originalmaß vor. Die Aufmaßentfernung kann sich dann auf die Prothesenbasis und den Klebstoffüberschuss reduzieren; insofern können Wiedereinspann-Fehler oder Wiedereinspann-Ungenauigkeiten auch im Nachhinein korrigiert werden. Wichtig ist jedenfalls die Entfernung des Überschusses an Fügematerial.

Als Fügematerial kann ein beliebiges geeignetes Material verwendet werden, dass geeignet ist, den Spalt zwischen Zahnausnehmung und Zahn im Basalbereich zu füllen. Typischerweise werden hier an sich bekannte Zahnklebstoffe verwendet, die aus dem Klebespalt herausquellen, wobei der Überschuss nach Aushärtung durch Fräsen entfernt wird.

Der aufmaßfreie Bereich, der sich an den Zahnfleischsaum anschließt, wird hier als Übergangsbereich bezeichnet. Dieser kann auch vollständig mit Klebstoffüberschuss ausgefüllt sein, so dass sich per Fräsen in günstiger Weise in einem Zug das Aufmaß und der Klebstoffüberschuss entfernen lässt.

In einer anderen Ausprägung der Erfindung ist ein Verfahren zur Erzeugung einer Prothese oder Teilprothese basierend auf digitalen Daten, unter Verwendung von mehreren in einem Zahnbogen vorliegenden Zähnen und einer herzustellenden Prothesenbasis, vorgesehen.

Bei diesem Verfahren wird die Prothesenbasis mittels eines Fräswerkzeugs schruppgefräst, also in einem ersten Schritt gefräst. Die als Halbfabrikat vorliegende Prothesenbasis wird teilweise, insbesondere in Bereichen der Prothesenbasis, an welchen die Zähne und die Prothesenbasis aneinander anliegen und/oder miteinander zu verkleben sind, mittels eines anderen Fräswerkzeugs schlichtgefräst, also in einem zweiten Schritt gefräst.

Damit wird sie auf eine Zielhöhe gebracht, welche Zielhöhe der Anlage zwischen Prothesenbasis und Zahn oder Zahnbogen zuzüglich des erwünschten Klebespalts zwischen Prothesenbasis und Zahn oder Zahnbogen entspricht.

In vorteilhafter Ausgestaltung der Erfindung ist es vorgesehen, dass ein Prothesenzahnbogen aus einem zahnfarbenen Rohling in einem Schruppfrässchritt schruppgefräst wird und hieran anschließend die Basalfläche der Zähne des Prothesenzahnbogens und gegebenenfalls hieran angrenzende gingivale Bereiche des Zahnbogens in einem Schlichtfrässchritt schlichtgefräst werden.

In weiterer vorteilhafter Ausgestaltung der Erfindung ist es vorgesehen, dass in Zahnkavitäten der Prothesenbasis ein Zahnbogen, insbesondere ein hergestellter Prothesenzahnbogen, eingeklebt wird und hieran anschließend nach Aushärten des Klebstoffs für die Verbindung dieser die Kombination aus Prothesenzahnbogen und Prothesenbasis an sämtlichen Stellen, an denen lediglich schruppgefräste Bereiche vorliegen, schlichtgefräst wird.

In weiterer vorteilhafter Ausgestaltung der Erfindung ist es vorgesehen, dass der Zahnbogen zur Erstellung der Prothese aus Kunststoff besteht, insbesondere mit einer Härte/Festigkeit, die größer als diejenige des Prothesenbasismaterials ist und besonders bevorzugt Füllstoffe, insbesondere PMMA-Perlpolymer-Füller und/oder hochvernetzte Prepolymer-Füller aufweist, die von einer Diffusionsschicht umgeben sind, insbesondere in einem Füllgrad von 20 Gew.%.

In weiterer vorteilhafter Ausgestaltung der Erfindung ist es vorgesehen, dass die Prothesenbasis von einer flachzylindrischen Scheibe aus Prothesenbasismaterial wie PMMA ausgehend gefräst wird, und zwar schruppgefräst in einem solchen Ausmaß, dass die Außenkontur im Wesentlichen U-förmig ist.

In weiterer vorteilhafter Ausgestaltung der Erfindung ist es vorgesehen, dass, die Zustelltiefe des Schruppfräsers beim Fräsen der Prothesenbasis zwischen 0,7mm und 2,5mm beträgt, insbesondere zwischen 1,0mm und 2,0mm, beim Schlichtfräsen der Prothesenbasis zwischen 0,1mm und 0,5mm, und/oder dass die Zustelltiefe des Schruppfräsers beim Fräsen von Zahnbögen oder Zahnteilbögen zwischen 0,6 mmund 2,2 mm beträgt und beim Schlichtfräsen der Zahnbögen oder Zahnteilbögen zwischen 0,1 mm und 0,4 mm, bezogen je auf jeden Frässchritt.

Weitere Vorteile, Einzelheiten und Merkmale ergeben sich aus der nachfolgenden Beschreibung eines Ausführungsbeispiels der Erfindung anhand der Zeichnung.

Es zeigen:
- Fig. 1: eine schematische Ansicht der virtuellen Überführung eines Zahns in der Prothesenbasis im Originalmaß in einen Zahn in der Prothesenbasis mit dem erfindungsgemäßen Aufmaß, das wieder auf das Originalmaß reduziert wird.
- Fig. 2: eine Detaildarstellung der Realisierung des Aufmaßes gemäß Fig. 1; und
- Fig. 3: eine schematische Darstellung der Entfernung des Aufmaßes bzw. des Fügemassenüberschusses für ein erfindungsgemäßes Verfahren in der Ausführungsform gemäß den Fig. 1 und 2.

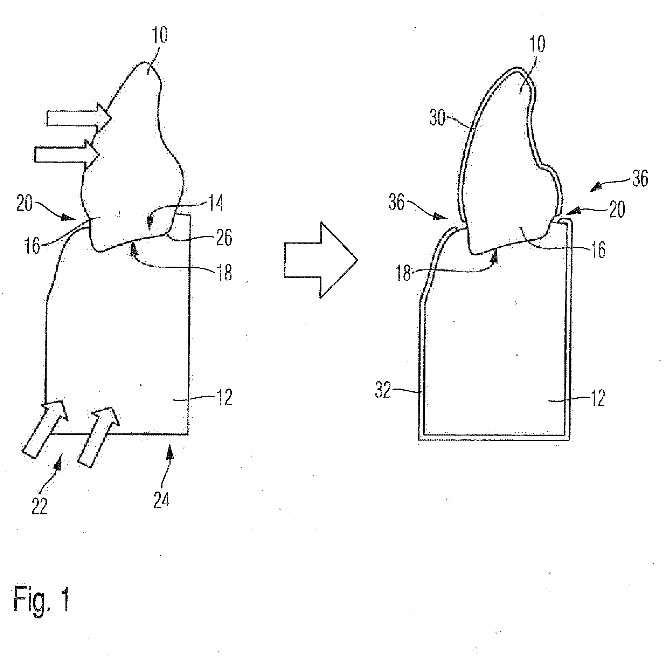

Mit dem erfindungsgemäßen Verfahren wird eine Prothese hergestellt, die aus in Fig. 1 schematisch dargestellten Zähnen 10 und der ebenfalls schematisch dargestellten Prothesenbasis 12 besteht.

Für die Aufnahme der Zähne weist die Prothesenbasis je eine Zahnausnehmung 14 auf, wobei ein gingivaler Bereich 16 des Zahns 10 je in der Zahnausnehmung aufgenommen ist. In an sich bekannter Weise weist jeder Zahn eine im wesentlichen flache, leicht konkav geformte Basalfläche 18 auf, und die Zahnausnehmung 14 ist dort entsprechend geformt.

Der Übergang zwischen dem Zahn 10 und der Prothesenbasis 12 wird typischerweise als Zahnfleischsaum oder Gingivasaum 20 bezeichnet. Er liegt sowohl an der vestibulären Seite 22 als auch an der oralen Seite 24 vor. Aus vestibulärer Sicht betrachtet bildet der Zahnfleischsaum in an sich bekannter Weise eine Kettenlinie und stellt im Mund des Patienten, insbesondere im Frontzahnbereich, einen markanten Rot/Weiß-Übergang dar.

In dem in Fig. 1 dargestellten virtuellen Modells eines Zahn 10 mit Prothesenbasis 12 ist ein Spalt 26 am Übergang zwischen diesen beiden vorgesehen. Dieser Spalt ist dafür bestimmt, später mit Fügemasse oder auch Klebstoff ausgefüllt zu werden. Beim Andrücken des weichen Klebstoffs wird dieser aus dem Spalt 26 herausgedrückt und fließt in den Bereich des Zahnfleischsaums 20.

Fig. 1 zeigt jedoch zunächst das virtuelle Modell dieses Zahns 10 mit der Prothesenbasis 12 in dem hier relevanten Teil. Diese liegen im links dargestellten Teil von Fig. 1 im Originalmaß vor.

Demgegenüber ist es im rechts dargestellten Teil von Fig. 1 vorgesehen, dass sowohl der Zahn 10 ein Aufmaß 30 als auch die Prothesenbasis 12 ein Aufmaß 32 aufweist. Dieses wird virtuell per CAD erzeugt und stellt gegenüber dem Originalmaß eine Volumenvergrößerung mit konstanter Schichtdicke dar.

Der Übergangsbereich 36 zwischen dem Zahn 10 und der Prothesenbasis 12 ist jedoch frei von Aufmaß 30 bzw 32. Der Gingivasaum 20 liegt insofern also frei, ist jedoch von dem aus Fig. 1 nicht ersichtlichen Klebstoffüberschuss bedeckt, wenn das per CAD virtuelle Modell durch Fräsen tatsächlich hergestellt wird.

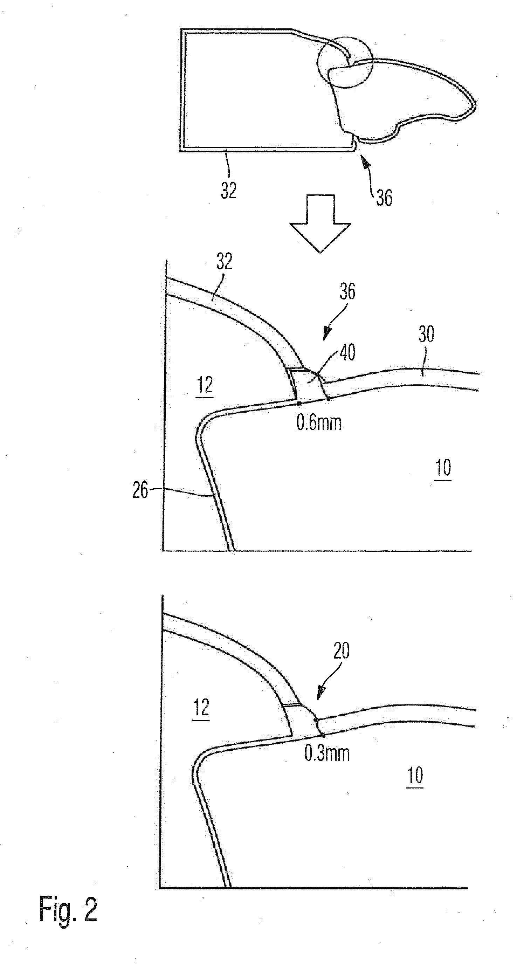

Aus Fig. 2 ist ersichtlich, in welcher Weise sich dieser Klebstoffüberschuss darstellt. Fig. 2 zeigt oben zunächst die rechte Abbildung in Fig. 1 und dann in der Mitte einen vergrößerten Ausschnitt aus dieser. Gleiche Bezugszeichen weisen hier wie auch in den weiteren Figuren auf gleiche Teile hin. Der Spalt 26 ist vollständig mit Klebstoff gefüllt. Der Klebstoff quillt jedoch seitlich aus dem Spalt 26 heraus und bildet dort einen Überschuss 40 an Klebstoff oder Fügemasse.

Im dargestellten Ausführungsbeispiel füllt dieser Klebstoffüberschuss 40 den Übergangsbereich 36 vollständig aus, so dass sich das Aufmaß 32 mehr oder weniger nahtlos über den Klebstoffüberschuss an das Aufmaß 30 anschließt.

In Fig. 2 sind auch mögliche Bemaßungen für den Übergangsbereich 36 und die Stärke des Aufmaßes dort eingetragen, wobei der Übergangsbereich etwa 0,6 mm hoch ist, gerechnet vom Zahnfleischsaum 20, und zwar beidseitig, insgesamt also 1,2 mm, und wobei die Schichtstärke des Aufmaßes 30, aber auch diejenige des Aufmaßes 32, etwa 0,3 mm beträgt.

Es versteht sich, dass der Überschuss 40 als typische Klebewulst sich über den Verlauf des Gingivasaums 20 ändert und mal dicker und mal weniger dick ist.

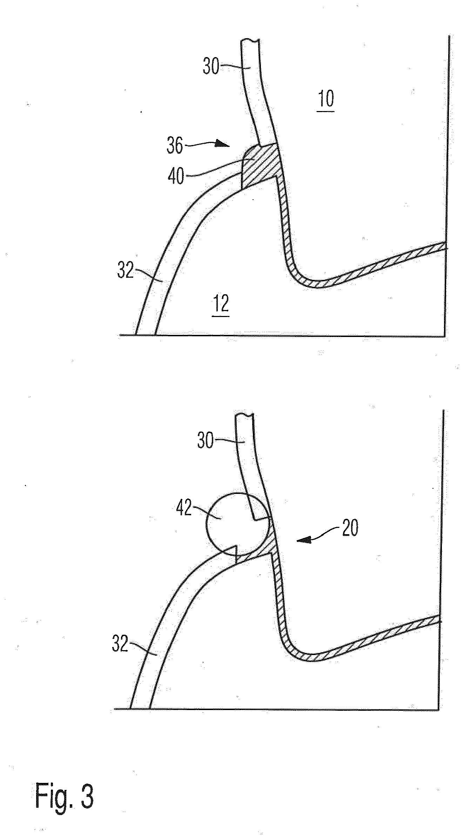

Erfindungsgemäß wird nun gemäß Fig. 3 nicht nur der Überschuss 40, sondern auch das Aufmaß 32 und das Aufmaß 30 von dem Übergangsbereich 36, der Prothesenbasis 12 und dem Zahn 10 entfernt. Hierzu dient ein Fräser 42, dessen Radius so gering bemessen ist, dass er gut der Kontur des Gingiva saumes 20 folgen kann, so dass der Gingivasaum 20 als Kettenlinie präzise herausgearbeitet ist und sich in ästhetisch gelungener Weise dem Betrachter darbietet.

Es versteht sich, dass das Aufmaß 30 und das Aufmaß 32, also das zugehörige Zusatzmaterial, dass je durch den Erstfräsvorgang belassen wurde, in einem Schritt entfernt wird.

Es versteht sich auch, dass je nach Fräser, der während des Erstfrässchritts verwendet wird, ein Werkzeugwechsel vorgenommen werden kann, indem nämlich speziell für den zweiten Frässchritt ein Fräser mit einem geringeren Durchmessers verwendet wird.

Die erfindungsgemäße Prothese zeichnet sich durch eine hohe Präzision ohne Aufstellfehler der Zähne aus, und zwar auch dann, wenn keine Transferschablone für das Aufstellen verwendet wird, wobei dennoch ein ästhetisch besonders gelungenes Ergebnis vorliegt.

## Patentansprüche

1. Verfahren zur Erzeugung einer Prothese oder Teilprothese basierend auf digitalen Daten, unter Verwendung von mehreren Zähnen (10) und einer herzustellenden Prothesenbasis (12), wobei die Zähne im Originalmaß, also frei von Aufmaß, als Konfektionszähne gefertigt sind und die Prothesenbasis (12) mit einem Aufmaß, insbesondere zwischen 0,05 und 0,8mm, gefertigt wird und wobei die Zähne in Zahnausnehmungen (14) der Prothesenbasis (12) unter Überbrückung einer Füge/Verbundfuge mit Füge- oder Verbundmasse eingeklebt werden, und die Prothese in dem ersten Zustand angrenzend an die Füge/Verbundfuge im Bereich des Zahnfleischsaumsoder Gingiva-Saums (20) einen Füge/Verbundmassenüberschuss aufweist, und wobei anschließend an eine Aushärtung der Füge- oder Verbundmasse das Aufmaß (30, 32) zusammen mit dem Fügemasse-/Verbundmasseüberschuss am Zahnfleischsaum (20) oder Gingivalsaum (20) entfernt wird.

2. Verfahren nach einem der vorhergehenden Ansprüche, **dadurch gekennzeichnet, dass** das Aufmaß (30, 32) an der Prothesenbasis (12) im Wesentlichen eine gleiche Stärke aufweist, insbesondere zwischen 0,05 und 0,8mm, besonders bevorzugt zwischen 0,1 und 0,5mm.

3. Verfahren nach einem der vorhergehenden Ansprüche, **dadurch gekennzeichnet, dass** die Prothesenbasis (12) durch ein Fräsverfahren gefertigt wird, und das Aufmaß an der Prothesenbasis (12), insbesondere zusammen mit dem Fügematerial-/Verbundmaterialüberschuss im Bereich des gingivalen Saums (20), in der gleichen Fräsmaschine entfernt wird.

4. Verfahren nach Anspruch 3, **dadurch gekennzeichnet, dass** die Größe des Aufmaßes in Abhängigkeit von einer Wiedereinspann-Genauigkeit der Prothesenbasis (12) in die Fräsmaschine eingestellt ist und insbesondere dieser mit einer Abweichung von weniger als +/- 50 Prozent entspricht.

5. Verfahren nach einem der vorhergehenden Ansprüche, **dadurch gekennzeichnet, dass** ein Einsetzen der Zähne (10) in die Zahnausnehmung (14) der Prothesenbasis (12) ungestützt, also ohne Transferschablone, erfolgt.

6. Verfahren nach einem der vorhergehenden Ansprüche, **dadurch gekennzeichnet, dass** die Zähne(10) im Originalmaß gefertigt werden und die Prothesenbasis (12) mit Aufmaß (30, 31) gefertigt wird und dass das Aufmaß (30, 32), nach dem Fügen oder Verbinden der Zähne (10) mit der Prothesenbasis(12) über eine Transferschablone, entfernt wird.

7. Verfahren nach einem der vorhergehenden Ansprüche, **dadurch gekennzeichnet, dass** die Prothesenbasis (12) mit einem zusätzlichen virtuellen Aufmaß (30, 32) von weniger als 0,2 mm, insbesondere etwa 0,1 mm, hergestellt werden, über welches die Wiedereinspannung-Ungenauigkeit beim Wegfräsen des Aufma-ßes (30, 32) kompensiert wird.

## Claims

1. A method for producing a prosthesis or partial prosthesis based on digital data, using a plurality of teeth (10) and a prosthesis base (12) to be produced, wherein the teeth are produced in original dimensions, i.e. free from oversize, as prefabricated teeth, and the prosthesis base (12) is produced with oversize, in particular between 0.05 and 0.8 mm, and wherein the teeth are glued into tooth recesses (14) of the prosthesis base (12) by means of joint or composite material while bridging a joint/composite joint, and in a first state of the prosthesis, adjacent to the joint/composite joint in the area of the gingival margin (20) has an excess of joint/composite material, and wherein subsequently to curing the joint or composite material, the oversize (30, 32) is removed from the gingival margin (20) along with the excess of joint/composite material.

2. The method according to one of the preceding claims, **characterized in that** the oversize (30, 32) at the prosthesis base (12) substantially has the same thickness, in particular between 0.05 and 0.8 mm, particularly preferably between 0.1 and 0.5 mm.

3. The method according to one of the preceding claims, **characterized in that** the prosthesis base (12) is manufactured by a milling method, and the oversize at the prosthesis base (12), in particular together with the excess of joint material/composite material in the region of the gingival margin (20), is removed in the same milling machine.

4. The method according to claim 3, **characterized in that** the size of the oversize is set as a function of a reclamping accuracy of the prosthesis base (12) in the milling machine, and in particular corresponds thereto with a deviation of less than +/- 50%.

5. The method according to one of the preceding claims, **characterized in that** insertion of the teeth (10) into the tooth recess (14) of the prosthesis base (12) is done unsupportedly, i.e. without transfer template.

6. The method according to one of the preceding claims, **characterized in that** the teeth (10) are manufactured having the original dimension and the prosthesis base (12) is manufactured with oversize (30, 31), and **in that** the oversize (30, 32) is removed after the teeth (10) have been joined or connected to the prosthesis base (12) by means of a transfer template.

7. The method according to one of the preceding claims, **characterized in that** the prosthesis base (12) is manufactured having an additional virtual oversize (30, 32) of less than 0.2 mm, in particular about 0.1 mm, by means of which the reclamping inaccuracy while milling away the oversize (30, 32) is compensated for.

## Revendications

1. Procédé de fabrication d'une prothèse ou d'une prothèse partielle sur la base de données numériques, en utilisant plusieurs dents (10) et une base de prothèse (12) à fabriquer, où les dents sont fabriquées à la dimension originale, donc sans surépaisseur, sont fabriquées en tant que dents de confection et la base de prothèse (12) est fabriquée avec une surépaisseur, en particulier entre 0,05 et 0,8 mm, et où les dents sont collées dans des évidements de dents (14) de la base de prothèse (12) en ponçant un joint d'assemblage/de liaison avec une masse d'assemblage ou de liaison, et la prothèse présente dans le premier état un excédent de masse de collage/composite adjacent au joint de collage/composite dans la zone du sillon gingival ou du sillon gingival (20), et où, après un durcissement de la masse de collage ou de la masse composite, la surépaisseur (30, 32) est enlevée en même temps que l'excédent de masse de collage/composite au niveau du sillon gingival (20) ou du sillon gingival (20).

2. Procédé selon l'une des revendications précédentes, **caractérisé en ce que** la surépaisseur (30, 32) à la base de la prothèse (12) présente une épaisseur sensiblement identique, notamment comprise entre 0,05 et 0,8 mm, plus préférentiellement entre 0,1 et 0,5 mm.

3. Procédé selon l'une quelconque des revendications précédentes, **caractérisé en ce que** la base de prothèse (12) est fabriquée par un procédé de fraisage, et la surépaisseur sur la base de prothèse (12), en particulier avec l'excès de matériau composite d'assemblage dans la zone de l'ourlet gingival (20), est éliminée dans la même fraiseuse.

4. Procédé selon la revendication 3, **caractérisé en ce que** la taille de la surépaisseur est réglée en fonction d'une précision de resserrage de la base de la prothèse (12) dans la fraiseuse et correspond notamment à celle-ci avec un écart inférieur à +/- 50 pour cent.

5. Procédé selon l'une des revendications précédentes, **caractérisé en ce qu'**une mise en place des dents (10) dans l'évidement dentaire (14) de la base de prothèse (12) est réalisée sans appui, c'est-à-dire sans gabarit de transfert.

6. Procédé selon l'une des revendications précédentes, **caractérisé en ce que** les dents (10) sont fabriquées à la dimension originale et la base de prothèse (12) est fabriquée avec une surépaisseur (30, 31) et **en ce que** la surépaisseur (30, 32) est retirée après l'assemblage ou la liaison des dents (10) avec la base de prothèse (12) par l'intermédiaire d'un gabarit de transfert.

7. Procédé selon l'une des revendications précédentes, **caractérisé en ce que** la base de prothèse (12) est fabriquée avec une surépaisseur virtuelle supplémentaire (30, 32) de moins de 0,2 mm, en particulier d'environ 0,1 mm, qui permet de compenser l'imprécision de la remise en tension lors du fraisage de la surépaisseur (30, 32).
